(19) Europäisches Patentamt / European Patent Office / Office européen des brevets

(11) **EP 3 472 805 B1**

(12) **EUROPEAN PATENT SPECIFICATION**

(45) Date of publication and mention of the grant of the patent:
**13.05.2020 Bulletin 2020/20**

(21) Application number: **17731534.8**

(22) Date of filing: **15.06.2017**

(51) Int Cl.:
**G06T 7/11** (2017.01)    **G06T 7/12** (2017.01)

(86) International application number:
**PCT/EP2017/064722**

(87) International publication number:
**WO 2017/216318 (21.12.2017 Gazette 2017/51)**

(54) **A METHOD AND APPARATUS FOR MAPPING AT LEAST PART OF A STRUCTURE IN AN IMAGE OF AT LEAST PART OF A BODY OF A SUBJECT**

VERFAHREN UND VORRICHTUNG ZUM ABBILDEN VON MINDESTENS EINEM TEIL EINER STRUKTUR IN EINEM BILD VON MINDESTENS EINEM TEIL EINES KÖRPERS EINER PERSON

PROCÉDÉ ET APPAREIL DE MAPPAGE D'AU MOINS UNE PARTIE D'UNE STRUCTURE DANS UNE IMAGE D'AU MOINS UNE PARTIE DU CORPS D'UN SUJET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.06.2016 EP 16174785**

(43) Date of publication of application:
**24.04.2019 Bulletin 2019/17**

(73) Proprietor: **Koninklijke Philips N.V.**
**5656 AG Eindhoven (NL)**

(72) Inventor: **WIEMKER, Rafael**
**5656 AE Eindhoven (NL)**

(74) Representative: **Zhu, Di**
**Philips Intellectual Property & Standards**
**High Tech Campus 5**
**5656 AE Eindhoven (NL)**

(56) References cited:
**US-A1- 2014 079 306**

- **G YANG ET AL: "A Multiscale Tracking Algorithm for the Coronary Extraction in MSCT Angiography", THE EFFECT OF APPLIED COMPRESSIVE LOADING ON TISSUE-ENGINEERED CARTILAGE CONSTRUCTS CULTURED WITH TGF-BETA3., vol. 1, September 2006 (2006-09), pages 3066-3069, XP055330246, ISSN: 1557-170X, DOI: 10.1109/IEMBS.2006.260712**
- **VYAS AKONDI ET AL: "Improved iteratively weighted centroiding for accurate spot detection in laser guide star based Shack Hartmann sensor", OPTICAL SENSING II, vol. 7588, 11 February 2010 (2010-02-11), page 758806, XP055328768, 1000 20th St. Bellingham WA 98225-6705 USA ISSN: 0277-786X, DOI: 10.1117/12.841331 ISBN: 978-1-62841-971-9**
- **SOUMIK UKIL ET AL: "Anatomy-Guided Lung Lobe Segmentation in X-Ray CT Images", IEEE TRANSACTIONS ON MEDICAL IMAGING, IEEE SERVICE CENTER, PISCATAWAY, NJ, US, vol. 28, no. 2, February 2009 (2009-02), pages 202-214, XP011232595, ISSN: 0278-0062, DOI: 10.1109/TMI.2008.929101**
- **COMANICIU D ET AL: "MEAN SHIFT: A ROBUST APPROACH TOWARD FEATURE SPACE ANALYSIS", IEEE TRANSACTIONS ON PATTERN ANALYSIS AND MACHINE INTELLIGENCE, IEEE COMPUTER SOCIETY, USA, vol. 5, no. 24, May 2002 (2002-05), pages 603-619, XP001141187, ISSN: 0162-8828, DOI: 10.1109/34.1000236**

**Description**

TECHNICAL FIELD OF THE INVENTION

The invention relates to the field of medical imaging and, in particular, relates to mapping at least part of a structure in an image of at least part of a body of a subject.

BACKGROUND TO THE INVENTION

Medical imaging is a useful tool for providing visual representations of the interior of a body of a subject including the organs. There exist many different types of medical imaging techniques including computed tomography (CT), magnetic resonance (MR), ultrasound (US), and similar. The images acquired from medical imaging can prove valuable for clinical analysis of a subject and, where necessary, medical intervention. For example, medical imaging is particularly useful for cancer screening.

Computed tomography scans are often used in lung cancer screening since the scans are cost effective and analysis of the images produced though computed tomography has been recognised to reduce the mortality rate of subjects. Computed tomography scans are undertaken by radiologists who are required to document the scans according to the standardised Lung-RADS™ reporting scheme. Under this scheme, the lungs are split into five lung lobes and these five lung lobes are divided into twenty lung segments. According to the scheme, the locations of any detected pulmonary nodules (for example, anomalies or abnormalities) have to be described with relation to the lung lobes and segments.

For example, US 2014/0079306 A1 discloses a method in which a three-dimensional medical image of a chest is obtained, a bronchial structure is extracted from the three-dimensional medical image, the bronchial structure is divided into plural bronchial structures based on the divergence of the bronchial structure, and plural divided lung regions are obtained based on the plural divided bronchial structures. G. Yang et al. ("A Multiscale Tracking Algorithm for the Coronary Extraction in MSCT Angiography", Proc. IEEE EMBS, 2006) disclose the extraction of coronary networks from 3D CT scans by means of iterative vessel centreline tracing from certain seed locations, used in bifurcations to generate new centreline seeds. Outside the field of medical image but as a very important reference in image segmentation, D. Comaniciu and P. Meer ("Mean Shift: A Robust Approach Toward Feature Space Analysis", IEEE T. PAMI, vol. 24, no. 5, 2002) disclose an iterative weighted centroid calculation achieving segmentation through the detection of centres/modes of attraction for certain pixel regions.

However, whilst the lung lobes (and bronchial structures) are separated by visible fissures and are therefore straightforward to identify, the lung segments themselves are anatomically defined in relation to the central arteries. This makes lung segments more difficult to quickly identify in images of the lung and as a result they are easily confused, even by experienced radiologists. Therefore, nodule location reporting errors in relation to the lung segments are common.

Moreover, the existing techniques for segmentation are known to be sensitive to noise and depend on a high spatial resolution in the image, which is not possible in most medical imaging techniques (for example, low image resolution is typical for computed tomography screening).

Therefore, there is a need for an improved method and apparatus for mapping at least part of a structure in an image of at least part of a body of a subject.

SUMMARY OF THE INVENTION

As noted above, a limitation with existing approaches is that it is difficult to identify the locations of segments of parts of the body of a subject (for example, lung segments). Given that segments are often defined in relation to the vascular structure of an organ, in order to overcome these problems it would be valuable to have a method of identifying ridgelines of vascular divergence to enable a physician to more easily identify the boundaries of segments of parts of the body of a subject.

Therefore, according to a first aspect of the invention, there is provided a method for mapping at least part of a structure in an image of at least part of a body of a subject. The method comprises determining a first weighted centroid of a first area surrounding a first point in the image of the at least part of the body of the subject, determining a second weighted centroid of a second area surrounding the first weighted centroid, and mapping at least part of a first trace of the structure in the image based on a position of the second weighted centroid with respect to a position of the first weighted centroid.

In some embodiments, the structure may be a vascular structure.

In some embodiments, the weighted centroid may be an intensity-weighted centroid, a vesselness-weighted centroid, a density-weighted centroid, or weighted according to a power of an intensity. In some embodiments, the centroid may be weighted according to a Gaussian weight of Euclidean distance.

In some embodiments, the method further may comprise determining a third weighted centroid of a third area surrounding the second weighted centroid and mapping at least part of the first trace of the structure in the image based on a position of the third weighted centroid with respect to the position of the second weighted centroid.

In some embodiments, the method may further comprise determining a fourth weighted centroid of a fourth area surrounding a second point in the image, determining a fifth weighted centroid of a fifth area surrounding the fourth weighted centroid, mapping at least part of a second trace of the structure in the image based on a position of the fourth weighted centroid with respect to a position of the fifth weighted centroid, and comparing the first trace and the second trace to identify at least one ridgeline of the structure in the image. In some embodiments, comparing may comprise determining local divergence maxima between the first trace and the second trace. In some embodiments, the second point may be adjacent to the first point.

In some embodiments, the method may be repeated starting from at least one other point in the image to map at least part of at least one other trace of the structure of the part of the body in the image.

In some embodiments, comparing may comprise determining whether the first trace and the second trace diverge, and identifying the at least one ridgeline of the structure in the image as being located between the first trace and the second trace where it is determined that the first trace and the second trace diverge.

In some embodiments, determining whether the first trace and the second trace diverge may comprise determining that the first trace and the second trace diverge where a Euclidian distance between a point in the first trace and a corresponding point in the second trace is less than a Euclidian distance between a subsequent point in the first trace and a subsequent corresponding point in the second trace. In some embodiments, determining whether the first trace and the second trace diverge may comprise determining that the first trace and the second trace diverge where an average Euclidean distance between corresponding points in the first trace and the second trace is greater than a threshold.

In some embodiments, determining whether the first trace and the second trace diverge may comprise determining that the first trace and the second trace diverge where a maximum Euclidian distance between corresponding points the first trace and the second trace is greater than a threshold.

In some embodiments, identifying the at least one ridgeline of the structure in the image may comprise identifying the at least one ridgeline as being located halfway between the first trace and the second trace. In some embodiments, the method may further comprise identifying the at least one ridgeline as being absent between the first trace and the second trace where it is determined that the first trace and the second trace converge.

In some embodiments, the image of the at least part of the body of the subject may be obtained by convolving an acquired image of the at least part of the body of the subject with a first Gaussian kernel to obtain a first smoothed image, convolving the acquired image with a second Gaussian kernel to obtain a second smoothed image, and subtracting the first smoothed image from the second smoothed image to obtain the image. In some embodiments, the standard deviation of the first Gaussian kernel may be greater than the standard deviation of the second Gaussian kernel.

In some embodiments, the image may be a two-dimensional image and the point in the image is a pixel or the image may be a three-dimensional image and the point in the image is a voxel.

In some embodiments, the image may be a two-dimensional image and the at least one ridgeline may be at least one line in the two-dimensional image, or the image may be a three-dimensional image and the at least one ridgeline may be at least one surface in the three-dimensional image.

In some embodiments, the method may further comprise, before determining a first weighted centroid, resampling the image into isotropic pixels or isotropic voxels.

According to a second aspect of the invention, there is provided a computer program product comprising a computer readable medium, the computer readable medium having computer readable code embodied therein, the computer readable code being configured such that, on execution by a suitable computer or processor, the computer or processor is caused to perform the method or the methods described above.

According to a third aspect of the invention, there is provided an apparatus for mapping at least part of a structure in an image of at least part of a body of a subject. The apparatus comprises a processor configured to determine a first weighted centroid of a first area surrounding a first point in the image of the at least part of the body of the subject, determine a second weighted centroid of a second area surrounding the first weighted centroid, and map at least part of a first trace of the structure in the image based on a position of the second weighted centroid with respect to a position of the first weighted centroid.

In some embodiments, the processor may be further configured to determine a fourth weighted centroid of a fourth area surrounding a second point in the image, determine a fifth weighted centroid of a fifth area surrounding the fourth weighted centroid, map at least part of a second trace of the structure in the image based on a position of the fourth weighted centroid with respect to a position of the fifth weighted centroid, and compare the first trace and the second trace to identify at least one ridgeline of the structure in the image. In some embodiments, the second point may be adjacent to the first point.

In some embodiments, the processor may be configured to control one or more user interfaces to render the mapped at least part of the first trace of the structure in the image.

According to the above aspects and embodiments, it is possible to automatically trace at least part of a structure (for example, the vascular structure) of the body of a subject from each point of the image for a certain length. It is also possible to identify ridgelines such as those of high vascular divergence. Moreover, this is achieved in a simple and efficient manner. The method and apparatus is also highly robust against noise as well as low image resolution. The identified ridgelines can convey helpful orientation information (for example, to a healthcare specialist such as a radiologist) when overlaid onto the original image, allowing easy identification of lobar segments.

There is thus provided an improved method and apparatus for mapping at least part of a structure in an image of at least part of a body of a subject.

BRIEF DESCRIPTION OF THE DRAWINGS

For a better understanding of the invention, and to show more clearly how it may be carried into effect, reference will now be made, by way of example only, to the accompanying drawings, in which:

Figure 1 is a block diagram of an apparatus according to an embodiment;
Figure 2 is a flow chart illustrating a method according to an embodiment;
Figure 3 is a flow chart illustrating a method according to another embodiment;
Figure 4 is a flow chart illustrating a method according to another embodiment;
Figure 5 is a flow chart illustrating a method according to an exemplary embodiment; and
Figure 6 is an illustration of an original image A and a processed image B according to an embodiment.

DETAILED DESCRIPTION OF THE PREFERRED EMBODIMENTS

As noted above, the invention provides an improved method and apparatus for mapping at least part of a structure in an image of at least part of a body of a subject, which overcomes the existing problems.

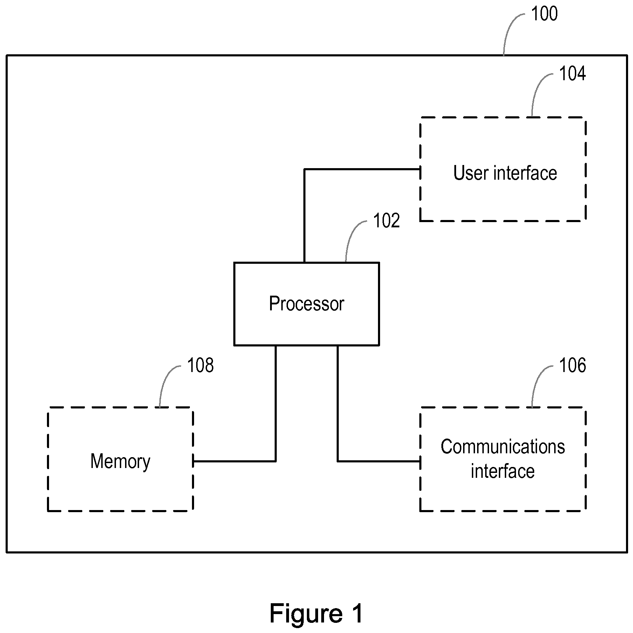

Figure 1 shows a block diagram of an apparatus 100 according to an embodiment of the invention that can be used for mapping at least part of a structure in an image of at least part of a body of a subject.

The apparatus 100 comprises a processor 102 that controls the operation of the apparatus 100 and that can implement the method describe herein. The processor 102 can comprise one or more processors, processing units, multi-core processors or modules that are configured or programmed to control the apparatus 100 in the manner described herein. In particular implementations, the processor 102 can comprise a plurality of software and/or hardware modules that are each configured to perform, or are for performing, individual or multiple steps of the method according to embodiments of the invention.

Briefly, the processor 102 is configured to determine a first weighted centroid of a first area surrounding a first point in the image of the at least part of the body of the subject, determine a second weighted centroid of a second area surrounding the first weighted centroid, and map at least part of a first trace of the structure in the image based on a position of the second weighted centroid with respect to a position of the first weighted centroid. In some embodiments, the image is a two-dimensional image and the point in the image is a pixel. In other embodiments, the image is a three-dimensional image and the point in the image is a voxel. The image can be a medical image such as a computed tomography (CT) image, a magnetic resonance (MR) image, an ultrasound (US) image, an X-ray image, or any other medical image.

In some embodiments, the structure in the image of at least part of the body of the subject is a vascular, lymphatic or lobar structure. Examples of the structure include vessels such as arteries, veins, and capillaries. The part of the body of the subject may be any part of the body of the subject comprising the structure to be mapped. For example, the part of the body of the subject may be the lung of the subject, the intestine of the subject, the kidney of the subject, the liver of the subject, the breast of the subject, another lobar organ of the subject, or any other part of the body of the subject comprising the structure to be mapped. Although examples have been provided for the part of the body of the subject and the structure of at least part of the body of the subject in the image, it will be understood that the invention may also be used for mapping other structures of other parts of the body of the subject.

In any of the embodiments described herein, a weighted centroid can be weighted in any suitable way. For example, the weighted centroid can be a centroid weighted according to intensity (which may be referred to as an intensity-weighted centroid), a centroid weighted according to density (which may be referred to as a density-weighted centroid), a centroid weighted according to a power of the intensity (which may be referred to as a power-of-intensity-weighted centroid), or a centroid weighted according to a vesselness (which may be referred to as a vesselness-weighted centroid). In any of these examples, the weight can be a scalar property value such as a scalar intensity value, a scalar density value, a scalar power of intensity value, or a scalar vesselness value. In order to determine a weighted centroid of an area surrounding a point (or surrounding a weighted centroid) in the image, the coordinate values of each point in the area are multiplied by the weight for that point and the resulting values are summed and then divided by the sum of all of the weights.

In order to determine an intensity-weighted centroid of an area surrounding a point (or a weighted centroid) in the image, the coordinate values of each point in the area are multiplied by the scalar intensity value for that point and the resulting values are summed and then divided by the sum of all of the scalar intensity values. An intensity-weighted centroid can be useful since the structure (e.g. a vessel) in the image is typically brighter than the background such that the intensity value of each point in the area can be used directly as a weighting factor. The intensity-weighted centroid is an example of a centroid weighted according to a zero derivative. In order to determine a power-of-intensity-weighted centroid of an area surrounding a point (or a weighted centroid) in the image, the coordinate values of each point in the area are multiplied by the scalar power of intensity value for that point and the resulting values are summed and then divided by the sum of all of the scalar power of intensity values.

In order to determine a density-weighted centroid of an area surrounding a point (or a weighted centroid) in the image, the coordinate values of each point in the area are multiplied by the scalar density value for that point and the resulting values are summed and then divided by the sum of all of the scalar density values. A density-weighted centroid is similar to an intensity-weighted centroid but can apply to images where the number of photons is recorded as a density of received photons. In some embodiments (for example, in a computed tomography image embodiment or an X-ray image embodiment), a density is indicated by an intensity value for weighting the centroid. The density of a point may be proportional to the intensity of the point.

According to some embodiments, in order to determine an vesselness-weighted centroid of an area surrounding a point (or a weighted centroid) in the image, the coordinate values of each point in the area are multiplied by the scalar vesselness value for that point and the resulting values are summed and then divided by the sum of all of the scalar vesselness values. The scalar vesselness value defines how probable it is that a point in the image belongs to a vessel. In some embodiments, the vesselness may be determined based on a Hessian matrix. For example, the vesselness may be defined by the eigenvalues of the Hessian matrix. In some embodiments, the vesselness may be determined based on a structure tensor.

In some embodiments, in order to determine a vesselness-weighted centroid of an area surrounding a point (or surrounding a weighted centroid) in the image according to some embodiments, a first spatial derivative of the coordinate values of each point in the area may be determined. These first spatial derivatives form a gradient vector that can be used in an outer vector product with a radial direction vector to yield a matrix (specifically, a 2x2 matrix for a two dimensional image and a 3x3 matrix for a three dimensional image). For example, a summation of all matrices yields a symmetric structure tensor from which eigenvalues can be determined. The magnitude of the second eigenvalue signifies cylindrical structures (e.g. vessels) and thus, in some embodiments, the magnitude of the second eigenvalue can be used as a weighting factor to emphasise a cylindrical structure in the image. Alternatively or in addition, in some embodiments, a ratio of the second eigenvalue to the largest eigenvalue can be used as a weight factor.

According to some embodiments, instead of determining a first spatial derivative of the coordinate values of each point in the area, a second spatial derivative of the coordinate values of each point in the area may be determined. The second derivatives form a two-dimensional symmetric matrix (specifically, a 2x2 matrix for a two-dimensional image and a 3x3 matrix for a three-dimensional image), yielding two and three eigenvalues, respectively. A weighting according to the first derivative and the second derivative (as described above) are examples of vesselness weightings that can be used to highlight structures (or, more specifically, vessels) over background regions.

In any of the embodiments described above, a further weighting may also be applied (for example, a spatial weighting such as a Gaussian weighting, as described later).

Returning again to Figure 1, in some embodiments, the apparatus 100 may also comprise at least one user interface 104. Alternatively or in addition, a user interface 104 may be external to (i.e. separate to or remote from) the apparatus 100. For example, the user interface 104 may be part of another device.

A user interface 104 may be for use in providing the subject or other user of the apparatus 100 (for example, a healthcare provider, a healthcare specialist, a care giver, or any other person) with information resulting from the method according to the invention. The processor 102 may be configured to control one or more user interfaces 104 to provide information resulting from the method according to the invention. For example, the processor 102 may be configured to control one or more user interfaces 104 to render the mapped at least part of the first trace of the structure in the image. Alternatively or in addition, a user interface 104 may be configured to receive a user input. In other words, a user interface 104 may allow a subject or another user of the apparatus 100 to manually enter data, instructions, or information. The processor 102 may be configured to acquire a user input from one or more user interfaces 104.

A user interface 104 may enable rendering (or output) of information, data or signals to the subject or another user of the apparatus 100. Alternatively or in addition, a user interface 104 may enable the subject or another user of the apparatus 100 to provide a user input, interact with and/or control the apparatus 100. For example, the user interface 104 may comprise one or more switches, one or more buttons, a keypad, a keyboard, a touch screen or an application (for example on a tablet or smartphone), a display screen or other visual indicator, one or more speakers, one or more microphones, any other voice dialogue components, one or more lights, a component for providing tactile feedback (e. g. a vibration function), or any other user interface or combination of user interfaces.

In some embodiments, the apparatus 100 may also comprise a communications interface 106 for enabling the apparatus 100 to communicate with any interfaces, sensors and devices that are internal or external to the apparatus 100. The communications interface 106 may communicate with any interfaces, sensors and devices wirelessly or via a wired connection. For example, in the embodiment where the user interface 104 is external to the apparatus 100, the communications interface 106 may communicate with the external user interface wirelessly or via a wired connection.

In some embodiments, the apparatus 100 may also comprise a memory 108 configured to store program code that can be executed by the processor 102 to perform the method described herein. The memory 108 can also be used to store information, data, signals and measurements made or acquired by the processor 102 of the apparatus 100 or by any devices, sensors and interfaces that are external to the apparatus 100.

It will be appreciated that Figure 1 only shows the components required to illustrate this aspect of the invention, and in a practical implementation the apparatus 100 may comprise additional components to those shown. For example, the apparatus 100 may comprise a battery or other power supply for powering the apparatus 100 or means for connecting the apparatus 100 to a mains power supply.

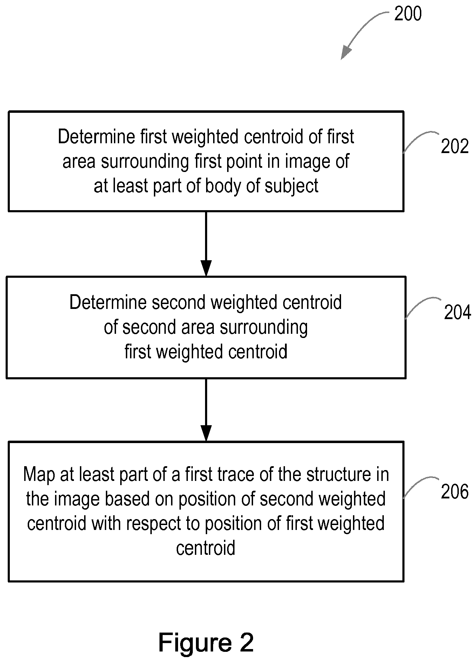

Figure 2 illustrates a method 200 for mapping at least part of a structure in an image of at least part of a body of a subject according to an embodiment. The illustrated method 200 can generally be performed by or under the control of the processor 102 of the apparatus 100.

With reference to Figure 2, at block 202, a first weighted centroid of a first area surrounding a first point in the image of the at least part of the body of the subject is determined. In effect, the first point in the image is used as a starting point for a first trace of the structure in the image. The first point in the image may be an arbitrarily selected point in the image or may be a predefined point in the image. The first weighted centroid is then the next point for the first trace of the structure in the image. The first weighted centroid is the weighted centroid of a first area surrounding the first point in the image. Herein, an area surrounding a point (or a weighted centroid) may also be referred to as a local neighbourhood around the point (or the weighted centroid).

The size of the area surrounding a point may be a predefined area. For example, in some embodiments, the area surrounding a point may be a preprogramed area stored in the memory 108. In some embodiments, the area may be set by the processor 102 based on information learnt from testing performed on trial datasets or based on a user input received via the user interface 104. The area may also be adaptable by the processor 102 based on information learnt by the processor 102 or by a user input received via the user interface 104. In some embodiments, the area may be set according to the size of the image, the size of the feature to be mapped and/or the relative sizes of the image and the feature to be mapped. In some embodiments, different sizes of area may be used for different features. For example, smaller features (such as capillaries) may be mapped with a smaller sized area than that used to map larger features (such as veins or arteries). In some embodiments, an image may be mapped more than once, using a range of different sized areas, in order to locate features on different scales. For example, typical sizes of lung segments (i.e. the subunits which form the lung lobes) are around 50 mm. Therefore, if a lung segment is to be mapped, the area used to compute the centroids may be set to have an equivalent pixel or voxel width that is smaller than this size to allow lung segments to be differentiated.

At block 204, a second weighted centroid of a second area surrounding the first weighted centroid is determined. At block 206, at least part of the first trace of the structure in the image is mapped based on a position of the second weighted centroid with respect to a position of the first weighted centroid. The mapping between the position of the second weighted centroid with respect to the position of the first weighted centroid may be referred to as a step in (or a section or part of) the first trace. Thus, the mapping of at least part of the first trace is defined based on the relative positions of the first weighted centroid and the second weighted centroid. In this way, the first weighted centroid and the second weighted centroid form a part of the first trace. The first trace thus comprises a plurality of centroids including at least the first (starting) point, the first weighted centroid and the second weighted centroid. In some embodiments, for example, the mapping of at least part of the first trace can be defined as a line (which may be straight or curved) that connects the second weighted centroid to the first weighted centroid.

In effect, the mapping of at least part of the first trace of the structure in the image extracts or infers from the image a location of at least part of the structure in the image. Therefore, according to the above-described method, successive weighted centroids plot out a path in the image that is directed toward or along features of the structure. For example, successive weighted centroids may plot successive points along a capillary (such as from the finest end of the capillary towards an associated vein or artery). In some embodiments, an overlay can be generated with the at least part of the first trace of the structure provided on the overlay.

The mapped at least part of the first trace of the structure in the image may then be rendered to the subject or another user. For example, as mentioned earlier, the processor 102 may be configured to control one or more user interfaces 104 to render the mapped at least part of the first trace of the structure. In an exemplary embodiment, the mapped at least part of the first trace of the structure is rendered by a display screen. As previously mentioned, in some embodiments, an overlay can be generated with the at least part of the first trace of the structure provided on the overlay. Thus, in some embodiments, the mapped at least part of the first trace of the structure may be rendered as an overlay over the original image. In this way, the structure of the part of the body in the image can be visualised or highlighted.

The method of Figure 2 may be repeated starting from at least one other point in the image to map at least part of at least one other trace of the structure of the part of the body in the image. In some embodiments, each point in the image is used as a starting point for a trace. In other words, a trace is started from each point in the image according to some embodiments.

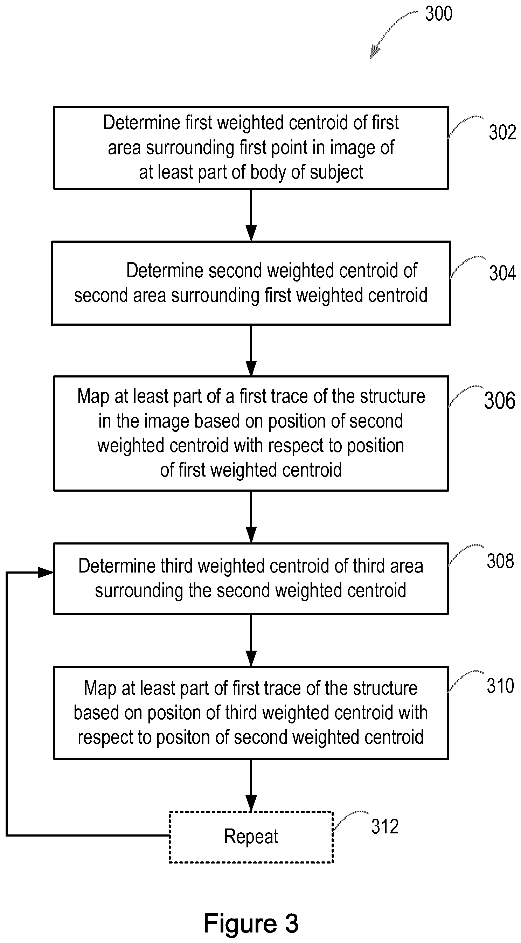

Figure 3 illustrates a method 300 for mapping at least part of a structure in an image of at least part of a body of a subject according to another embodiment. The illustrated method 300 can generally be performed by or under the control of the processor 102 of the apparatus 100.

With reference to Figure 3, at block 302, a first weighted centroid of a first area surrounding a first point in the image of the at least part of the body of the subject is determined. A block 304, a second weighted centroid of a second area surrounding the first weighted centroid is determined. At block 306, at least part of a first trace of the structure in the image is mapped based on a position of the second weighted centroid with respect to a position of the first weighted centroid. As mentioned earlier, the mapping between the position of the second weighted centroid with respect to the position of the first weighted centroid is a first step in the first trace. In other words, the method described above with reference to block 202, block 204 and block 206 of Figure 2 respectively is performed. The details of the method will not be repeated here but will be understood to also apply to blocks 302, 304 and 306 of Figure 3

At block 308 of Figure 3, a third weighted centroid of a third area surrounding the second weighted centroid is determined. At block 310, at least part of the first trace of the structure in the image is mapped based on a position of the third weighted centroid with respect to the position of the second weighted centroid. The mapping between the position of the third weighted centroid with respect to the position of the second weighted centroid is a second step in the first trace. Thus, the first trace comprises a plurality of centroids and, in this embodiment, includes at least the first (starting) point, the first weighted centroid, the second weighted centroid, and the third weighted centroid.

At block 312, the method of blocks 308 and 310 is repeated for at least one other step in the first trace (or at least one other weighted centroid). Here, each of the at least one other weighted centroids is determined based on the area surrounding the previous weighted centroid and at least part of the first trace of the structure is mapped based on the position of the at least one other weighted centroid with respect to the previous weighted centroid. The mapping between each at least one other weighted centroid with respect to the previous weighted centroid is another step in the first trace. In this way, the first trace can comprise a plurality of steps N.

The method of blocks 308 and 310 may be repeated for a predefined number of steps N (or for a predefined number of weighted centroids) or a predefined number of times. In some embodiments, a value for the predefined number of steps N (or predefined number of weighted centroids) or predefined number of times may be a preprogramed value stored in the memory 108. In some embodiments, the value may be set by the processor 102 based on information learnt from testing performed on trial datasets or based on a user input received via the user interface 104. The value may also be adaptable by the processor 102 based on information learnt by the processor 102 or by a user input received via the user interface 104.

Each time the method of blocks 308 and 310 is repeated, the weighted centroids that are determined move toward or along the structure in the image of the at least part of the body of the subject. For example, where a centroid is density-weighted, the weighted centroids that are determined move toward the denser (and/or thicker) structure in the image and along the structure to the denser (and/or thicker) parts of the structure. Similarly, where a centroid is intensity-weighted, the weighted centroids that are determined move toward the higher intensity structure in the image and along the structure to the higher intensity parts of the structure. In this way, it is possible to produce traces of high density or high intensity structures in an image.

The mapped first trace of the structure may then be rendered to the subject or another user. For example, as mentioned earlier, the processor 102 may be configured to control one or more user interfaces 104 to render the mapped first trace of the structure. In an exemplary embodiment, the mapped first trace of the structure is rendered by a display screen. The mapped first trace of the structure may be rendered as an overlay over the original image. In this way, the structure of the part of the body in the image can be visualised or highlighted.

The method of Figure 3 may be repeated starting from at least one other point in the image to map at least part of at least one other trace of the structure of the part of the body in the image. In some embodiments, each point in the image is used as a starting point for a trace. In other words, a trace is started from each point in the image according to some embodiments.

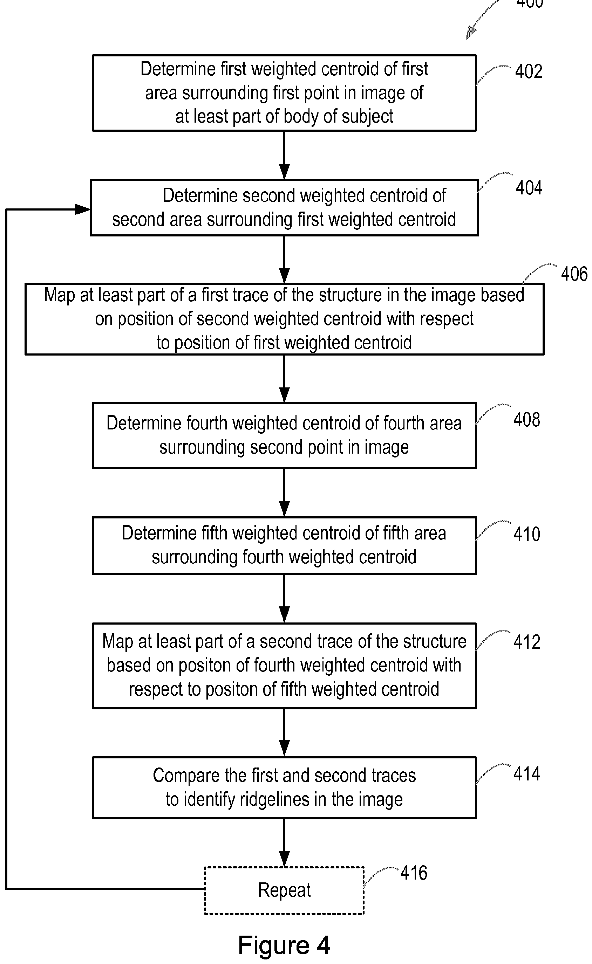

Figure 4 illustrates a method 400 for mapping at least part of a structure in an image of at least part of a body of a subject according to another embodiment. The illustrated method 400 can generally be performed by or under the control of the processor 102 of the apparatus 100.

With reference to Figure 4, at block 402, a first weighted centroid of a first area surrounding a first point in the image of the at least part of the body of the subject is determined. A block 404, a second weighted centroid of a second area surrounding the first weighted centroid is determined. At block 406, at least part of a first trace of the structure in the image is mapped based on a position of the second weighted centroid with respect to a position of the first weighted centroid. As mentioned earlier, the mapping between the position of the second weighted centroid with respect to the position of the first weighted centroid is a first step in the first trace. In other words, the method described above with reference to block 202, block 204 and block 206 of Figure 2 respectively is performed. The details of the method will not be repeated here but will be understood to also apply to blocks 402, 404 and 406 of Figure 4.

At block 408, a fourth weighted centroid of a fourth area surrounding a second point in the image is determined. The second point in the image may be an adjacent (or neighbouring) point in the image to the first point. For example, the first point and second point may be adjacent (or neighbouring) pixels in a two-dimensional image or adjacent (or neighbouring) voxels in a three-dimensional image. In effect, two adjacent (or neighbouring) points in the image are each used as starting points. The second point is a starting point for a second trace of the structure of at least part of the body in the image.

At block 410, a fifth weighted centroid of a fifth area surrounding the fourth weighted centroid is determined. At block 412, at least part of the second trace of the structure in the image is mapped based on a position of the fourth weighted centroid with respect to a position of the fifth weighted centroid. The mapping between the position of the fourth weighted centroid with respect to the position of the fifth weighted centroid is a first step in the second trace. Thus, the second trace comprises a plurality of centroids including at least the second (starting) point, the fourth weighted centroid and the fifth weighted centroid. In effect, the first trace and the second trace represent two independent traces of the structure of at least part of the body in the image.

At block 414, the first trace and the second trace are compared to identify at least one ridgeline of the structure in the image. A ridgeline is a border between regions of the structure in the image. For example, a ridgeline may be a border between regions of the structure with adverse or opposing flow directions or a border between regions where the structure diverges (e.g. branches). In embodiments where the image is a three-dimensional image, a ridgeline may be a plane or surface in the three-dimensional image. For example, a ridgeline may be a plane or surface that defines a border between different parts of the structure or between parts of the structure that diverge. In embodiments where the image is a two-dimensional image, a ridgeline may be a line in the two-dimensional image. For example, a ridgeline may be a line that defines a border between different parts of the structure or between parts of the structure that diverge.

In an embodiment, comparing the first trace and the second trace can comprise any one or more of determining a local divergence maxima between the first trace and the second trace, determining an average Euclidean distance between the first trace and the second trace, and determining a Euclidean distance between corresponding points in the first trace and the second trace.

Where an average Euclidean distance is determined, a mean distance for corresponding points in the two traces is determined. For example, for each point in the first trace, the Euclidean distance between the point in the first trace and a corresponding point in the second trace is determined and the mean distance is then the average of these determined Euclidean distances. In other words, the Euclidean distance between the $i^{th}$ point in the first trace and the $i^{th}$ point in the second trace is determined, the Euclidean distance between the $(i^{th}+1)$ point in the first trace and the $(i^{th}+1)$ point in the second trace is determined, and so on for each point in the first trace, and the average of these determined Euclidean distances (which can also be referred to as the average Euclidean distance) is used as a determined distance.

Alternatively or in addition, where a local divergence maxima is determined, a maximum distance for corresponding points in the two traces is determined. For example, for each point in the first trace, the Euclidean distance between a point in the first trace and a corresponding point in the second trace is determined. The maximum distance is then the maximum of these determined Euclidean distances. In other words, the Euclidean distance between the $i^{th}$ point in the first trace and the $i^{th}$ point in the second trace is determined, the Euclidean distance between the $(i^{th}+1)$ point in the first trace and the $(i^{th}+1)$ point in the second trace is determined, and so on for each point in the first trace, and the maximum or largest of these determined Euclidean distances (which can also be referred to as the local divergence maxima) is used as a determined distance.

Where the determined distance (for example, the average Euclidean distance between corresponding points in the first trace and the second trace, or the maximum Euclidian distance between corresponding points the first trace and the second trace) is below or less than a predefined threshold value, the determined distance indicates that the first trace and the second trace converge. On the other hand, where the determined distance (for example, the average Euclidean distance between corresponding points in the first trace and the second trace, or the maximum Euclidian distance between corresponding points the first trace and the second trace) is above or greater than a predefined threshold value, the determined distance indicates that the first trace and the second trace diverge. In some embodiments, the predefined threshold value may be a preprogramed threshold value stored in the memory 108. In some embodiments, the threshold value may be set by the processor 102 based on information learnt from testing performed on trial datasets or based on a user input received via the user interface 104. The threshold value may also be adaptable by the processor 102 based on information learnt by the processor 102 or by a user input received via the user interface 104. The predefined threshold value may be set to a value of 40mm, 45mm, 50mm, 55mm, 60mm, or any intervening value. Although example values have been provided for the predefined threshold value, it will be understood that any other value may also be used.

Alternatively or in addition, where a Euclidean distance between corresponding points in the first trace and the second trace is determined, a Euclidean distance between a point in the first trace and the second trace is compared to the Euclidean distance between a subsequent point in the first trace and the second trace. For example, for each point in the first trace, the Euclidean distance between a point in the first trace and a corresponding point in the second trace is determined. In other words, the Euclidean distance between the $i^{th}$ point in the first trace and the $i^{th}$ point in the second trace is determined, the Euclidean distance between the $(i^{th}+1)$ point in the first trace and the $(i^{th}+1)$ point in the second trace is determined, and so on for each point in the first trace. Then, it is determined whether the Euclidean distance determined for two or more successive or consecutive points in the traces increases or decreases. For example, it is determined whether the Euclidean distance between the $(i^{th}+1)$ points of the first trace and second trace is larger or smaller than the Euclidean distance between the $i^{th}$ points of the first trace and second trace. If the Euclidean distance determined for two or more successive or consecutive points in the traces increases (for example, if the Euclidean distance between the $(i^{th}+1)$ points of the first trace and second trace is larger than the Euclidean distance between the $i^{th}$ points of the first trace and second trace), the first trace and the second trace are determined to diverge. In other words, it is determined that the first trace and the second trace diverge where a Euclidian distance between a point in the first trace and a corresponding point in the second trace is less than a Euclidian distance between a subsequent point in the first trace and a subsequent corresponding point in the second trace. On the other hand, if the Euclidean distance determined for successive or consecutive points in the traces decreases (for example, if the Euclidean distance between the $(i^{th}+1)$ points of the first trace and second trace is smaller than the Euclidean distance between the $i^{th}$ points of the first trace and second trace), the first trace and the second trace are determined to converge. In other words, it is determined that the first trace and the second trace converge where a Euclidian distance between a point in the first trace and a corresponding point in the second trace is greater than a Euclidian distance between a subsequent point in the first trace and a subsequent corresponding point in the second trace.

Thus, in any of the manners described above, it can be determined whether the first trace and the second trace diverge (or converge). Where the first trace and the second trace are determined to diverge, a ridgeline of the structure is identified to lie (or be located) between the first trace and the second trace. For example, the ridgeline of the structure may be identified to lie (or be located) halfway between the first trace and the second trace such as along a line that is equidistant between the first trace and the second trace. On the other hand, where the first trace and the second trace are determined to converge, a ridgeline of the structure is not identified to lie (or be located) between the first trace and the second trace or is identified as being absent between the first trace and the second trace.

In this way, it is possible to identify at least one ridgeline of the structure in the image through a comparison of the first trace and the second trace. This is useful, for example, for a vascular structure in an image as the two traces will either converge or diverge due to the branching nature of the vascular structure. In effect, the first trace and the second trace will be attracted to increasingly larger vessels to thus follow the internal structure of the segments or lobes of the structure in the image.

The identified at least one ridgeline of the structure in the image may then be rendered to the subject or another user. For example, the processor 102 may be configured to control one or more user interfaces 104 to render the identified at least one ridgeline of the structure. In an exemplary embodiment, the identified at least one ridgeline of the structure is rendered by a display screen. The identified at least one ridgeline of the structure may be rendered as an overlay over the original image. In this way, the structure of the part of the body in the image can be visualised or highlighted.

Returning back to Figure 4, at block 416, the method of blocks 404, 406, 408, 410, 412 and 414 may be repeated for at least one other first and second trace of the structure in the image. Here, for both the first and second trace, each weighted centroid is determined based on the area surrounding the previous weighted centroid and the position of the weighted centroid with respect to the previous weighted centroid is used to determine a step in the trace of the structure in the image. The method of blocks 404, 406, 408, 410, 412 and 414 may be repeated for a predefined number of steps N (or for a predefined number of weighted centroids) or a predefined number of times. In some embodiments, each point in the image is used as the starting point for a trace. In other words, a trace is started from each point in the image according to some embodiments. In some embodiments, a precision of the location of a ridgeline may be improved by generating one or further pairs of traces (in the same manner to that described above) with different starting points to the first pair of traces and interpolating the location of a ridgeline by comparing the locations of different diverging traces.

As mentioned previously, in any of the described embodiments, the image of the at least part of the body of the subject that is used in the method described herein can be obtained in any suitable manner. The image may be the original (for example, a raw or unprocessed) image of the at least part of the body of the subject or may be obtained by first processing an acquired image of the at least part of the body of the subject.

In an exemplary embodiment in which the image is obtained by processing an acquired image of the at least part of the body of the subject, the acquired image is convolved with a first Gaussian kernel to obtain a first smoothed image. The acquired image is also convolved with a second Gaussian kernel to obtain a second smoothed image. The image of the at least part of the body of the subject that is used in the method described herein is then obtained by subtracting the first smoothed image from the second smoothed image. In some embodiments, the standard deviation of the first Gaussian kernel is greater than the standard deviation of the second Gaussian kernel. In some embodiments, the scale of the Gaussian kernel is selected to be smaller than the structure that is being mapped. For example, if lung segments (or lobes) are being mapped, the kernel is selected to be smaller in scale than a typical lung segment size.

In some embodiments, before the image of at least part of body of subject is processed according to any of the embodiments described herein, the method may first comprise segmenting the image into a plurality of image segments. In these embodiments, the method may then be performed for at least one of the plurality of image segments. The plurality of image segments may be of different parts of the body of the subject. For example, where the image is of the lungs of a subject, one image segment may be of the left lung and another image segment may be of the right lung.

In any of the embodiments described herein, a weighted centroid (which may be the first weighted centroid, the second weighted centroid, the third weighted centroid, the fourth weighted centroid, the fifth weighted centroid, or any other weighted centroid) can be weighted in any suitable way. For example, the weighted centroid can be an intensity-weighted centroid, a density-weighted centroid, vesselness-weighted centroid, or weighted according to a power of the intensity, as described above.

In addition to these weights, a centroid may be further weighted (i.e. the intensity-weighting, density-weighting, vesselness-weighting, or weighting according to a power of the intensity may be further weighted) according to a uniform weight (such as a box-filter) within a local neighbourhood or a spatial weight (such as a Gaussian weight of Euclidean distance). In an embodiment, a plurality of points x (or each point x) in the area surrounding a starting point or a previous weighted centroid c can be selected. For each selected point x, the Euclidean distance d(x) = |x-c| is determined. Then, the weight w(x) of each point x is determined using a Gaussian normal distribution. For example, a Gaussian normal distribution formula for determining the weight w(x) of each point x can be expressed as:

$$w(x) = \exp(-0.5 * (d*d) / (s*s)),$$

where s is a predefined value. The predefined value s can be a preprogramed value stored in the memory 108. In some embodiments, the predefined value s may be set by the processor 102 based on information learnt from testing performed on trial datasets or based on a user input received via the user interface 104. The predefined value s may also be adaptable by the processor 102 based on information learnt by the processor 102 or by a user input received via the user interface 104.

In some embodiments, a weighted centroid may be weighted according to a Gaussian weight of Euclidean distance multiplied by a local vessel filter response to the power of an integer value. For example, the response of a vessel filter may be determined for each point in the image. A vessel filter provides a vesselness value. As described earlier, a vesselness value is a scalar value that describes how probable it is that a point (or weighted centroid) in the image belongs to a vessel. The power may be any integer value such as 1, 2, 3, 4, 5, 6 or any other integer value. Using a vessel filter in this way can provide vessel enhancement. In other words, the higher intensity values in the image can be emphasized, while the lower intensity values in the image can be de-emphasized.

In any of the embodiments described herein, before determining a first weighted centroid (at block 202 of Figure 2, at block 302 of Figure 3, or at block 402 of Figure 4), the method may further comprise resampling the image into isotropic points. For example, the isotropic points in the two-dimensional image embodiments are isotropic pixels and the isotropic points in the three-dimensional image embodiments are isotropic voxels. In this way, an image in which the spacing of the points is not equidistant can be resampled to achieve an isotropic spacing in which the spacing between the points is equidistant in all directions. For example, image volumes in which the spacing of the voxels in the x, y and z direction is not equidistant can be resampled to achieve an isotropic voxel spacing in which the spacing between the voxels is equidistant in the three directions *x, y* and *z*. In these embodiments, a first isotropic point in the resampled image may be used to determine the first weighted centroid in any of the embodiments of Figures 2, 3 or 4. Similarly, a second isotropic point in the resampled image may be used to determine the fourth weighted centroid in the embodiment of Figure 4. In this way, anisotropic points in the image can be isotropically resampled such that the method disclosed herein can be performed without consideration of the spacing of the points in the image and without introducing geometric distortions.

According to any of the embodiments, the first point and the second point (and any other starting points) in the image, the determined weighted centroids, the first trace and the second trace (and any other traces) can be stored, for example, in the memory 108 under the control of the processor 102. In this way, the stored information can be easily retrieved.

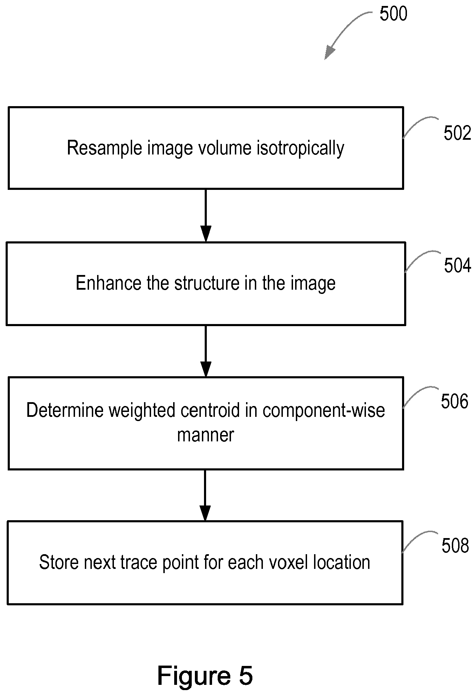

Figure 5 illustrates a method 500 for mapping at least part of a structure in an image of at least part of a body of a subject according to an exemplary embodiment. In this exemplary embodiment, the image is a three-dimensional image and the points in the image are voxels. The illustrated method 500 can generally be performed by or under the control of the processor 102 of the apparatus 100.

With reference to Figure 5, at block 502, the image volume is resampled isotropically. The isotropic resampling of the image volume (which may comprise an anisotropic voxel grid) allows subsequent steps to be performed without consideration of the voxel spacing and without introducing geometric distortions.

At block 504, the structure (for example, at least one vessel) in the image is enhanced. This is achieved in the manner described earlier by convolving the image with a first Gaussian kernel to obtain a first smoothed image, convolving the image with a second Gaussian kernel to obtain a second smoothed image, and subtracting the first smoothed image from the second smoothed image. In this exemplary embodiment, the standard deviation $\sigma_1$ of the first Gaussian kernel is greater than the standard deviation $\sigma_2$ of the second Gaussian kernel.

At block 506, the weighted centroid is determined in a component-wise manner. For example, a Gaussian smoothing of the three-dimensional volume $M_x$, for the spatial position component x, is performed as follows:

$$M_x = x \cdot I^k(\mathbf{x}),$$

where $I^k(\mathbf{x})$ is a vessel filter intensity (or, alternatively, the image intensity) at a location $\mathbf{x} = (x, y, z)$, and k is a positive integer value (for example, an integer value of 8 or any other positive integer value) to shift the mean towards higher vessel intensities. Here, the spatial position component x is summed, weighted by the local intensity at each point in the image.

Likewise, a Gaussian smoothing of the three-dimensional volume My for the spatial position component y, a Gaussian smoothing of the three-dimensional volume Mz for the spatial position component z and a Gaussian smoothing of the three-dimensional volume M0 is performed as follows:

$$My = y \cdot Ik(x), \quad Mz = z \cdot Ik(x), \text{ and } M0 = Ik(x).$$

In other words, each spatial position component x, y, z is summed independently, weighted by the local intensity at each point in the image. Here, the three-dimensional volume M0 is the sum of the weights of the local intensity at each point in the image.

In effect, the Gaussian smoothing of the three-dimensional spatial position components x, y, z yields four volumes of the same extent as the original image. Thus, the next trace point x' is given by the xyz-components, as follows:

$$x' = [ G\sigma * Mx(x), G\sigma * My(x), G\sigma * Mz(x) ] / ( G\sigma * M0(x) ).$$

Here, the three spatial position components x, y, z are determined from the weighted sum of each component, divided by the sum of the weights (i.e. the weighted average for each component).

At block 508, for each voxel location x, the next trace point x' is stored in the memory 108 for subsequent retrieval.

In this way, the illustrated method 500 according to this exemplary embodiment uses a series of Gaussian convolutions. This series of Gaussian convolutions allow the method for mapping at least part of the structure in the image of at least part of a body of a subject to be performed for the whole volume of the at least part (for example, the lung) of the body of the subject in an efficient way.

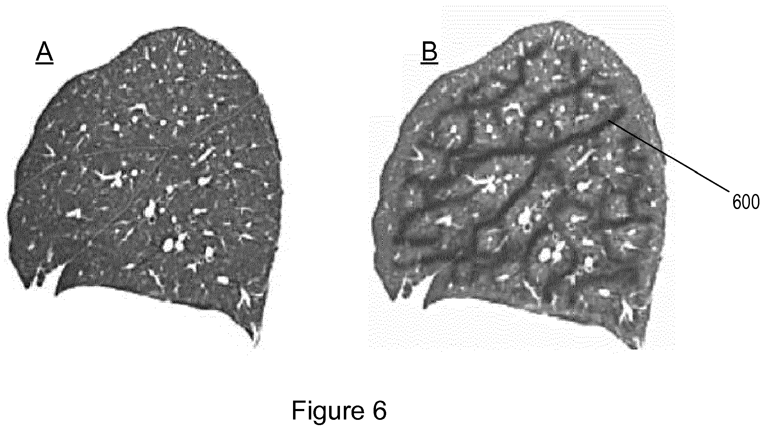

Figure 6 illustrates an original image A and a processed image B according to an embodiment. The processed image B is provided with an overlay rendered over the original image A, which represents the structure of the part of the body in the image. As illustrated, the highest vascular divergence values 600 appear darker in the overlay of the processed image B. It can be seen from the illustration that the ridgelines rendered in the overlay of the processed image B are formed not only at visible lobar fissures, but also at locations of divergence.

There is therefore provided an improved method and apparatus for mapping at least part of a structure in an image of at least part of a body of a subject. The method and apparatus can be useful in medical imaging analysis and visualisation tools. For example, the method and apparatus is particularly useful in cancer screening.

It will be appreciated that the invention also applies to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other. An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1.  A method for mapping at least part of a structure in an image of at least part of a body of a subject, the method comprising:

    determining (402) a first weighted centroid of a first area surrounding a first point in the image of the at least part of the body of the subject;
    determining (404) a second weighted centroid of a second area surrounding the first weighted centroid; and
    mapping (406) at least part of a first trace of the structure in the image based on a position of the second weighted centroid with respect to a position of the first weighted centroid;
    determining (408) a fourth weighted centroid of a fourth area surrounding a second point in the image, wherein the second point is adjacent to the first point;
    determining (410) a fifth weighted centroid of a fifth area surrounding the fourth weighted centroid;
    mapping (412) at least part of a second trace of the structure in the image based on a position of the fourth weighted centroid with respect to a position of the fifth weighted centroid; and
    comparing (414) the first trace and the second trace to identify at least one ridgeline of the structure in the image, wherein the ridgeline is a border between regions of the structure or between parts of the structure that diverge.

2.  A method as claimed in claim 1, wherein the structure is a vascular structure.

3.  A method as claimed in claim 1 or 2, wherein the weighted centroid is an intensity-weighted centroid, a vesselness-weighted centroid, a density-weighted centroid, or weighted according to a power of an intensity.

4.  A method as claimed in claim 3, wherein the centroid is further weighted according to a Gaussian weight of Euclidean distance.

5.  A method as claimed in any one of the preceding claims, the method further comprising:

determining a third weighted centroid of a third area surrounding the second weighted centroid; and
mapping at least part of the first trace of the structure in the image based on a position of the third weighted centroid with respect to the position of the second weighted centroid.

6. A method as claimed in claim 1, wherein comparing comprises:

determining whether the first trace and the second trace diverge; and
identifying the at least one ridgeline of the structure in the image as being located between the first trace and the second trace where it is determined that the first trace and the second trace diverge.

7. A method as claimed in claim 6 wherein determining whether the first trace and the second trace diverge comprises:

determining that the first trace and the second trace diverge where a Euclidian distance between a point in the first trace and a corresponding point in the second trace is less than a Euclidian distance between a subsequent point in the first trace and a subsequent corresponding point in the second trace;
determining that the first trace and the second trace diverge where an average Euclidean distance between corresponding points in the first trace and the second trace is greater than a threshold; or
determining that the first trace and the second trace diverge where a maximum Euclidian distance between corresponding points the first trace and the second trace is greater than a threshold.

8. A method as claimed in any one of claims 6 or 7, wherein identifying the at least one ridgeline of the structure in the image comprises identifying the at least one ridgeline as being located halfway between the first trace and the second trace.

9. A method as claimed in any one of claims 6, 7 or 8, further comprising:
identifying the at least one ridgeline as being absent between the first trace and the second trace where it is determined that the first trace and the second trace converge.

10. A method as claimed in any one of the preceding claims, wherein the method is repeated starting from at least one other point in the image to map at least part of at least one other trace of the structure of the part of the body in the image.

11. A method as claimed in any one of the preceding claims, wherein the image is a two-dimensional image and the point in the image is a pixel or the image is a three-dimensional image and the point in the image is a voxel.

12. A method as claimed in any one of the preceding claims, wherein the image is a two-dimensional image and the at least one ridgeline is at least one line in the two-dimensional image, or the image is a three-dimensional image and the at least one ridgeline is at least one surface in the three-dimensional image.

13. A computer readable medium having computer readable code embodied therein which, when the code is executed by a suitable computer or processor, causes the computer or processor to carry out the method of any of claims 1-12.

14. An apparatus (100) adapted to map at least part of a structure in an image of at least part of a body of a subject, the apparatus comprising:
a processor (102) configured to:

determine a first weighted centroid of a first area surrounding a first point in the image of the at least part of the body of the subject;
determine a second weighted centroid of a second area surrounding the first weighted centroid; and
map at least part of a first trace of the structure in the image based on a position of the second weighted centroid with respect to a position of the first weighted centroid;
determine a fourth weighted centroid of a fourth area surrounding a second point in the image, wherein the second point is adjacent to the first point;
determine a fifth weighted centroid of a fifth area surrounding the fourth weighted centroid;
map at least part of a second trace of the structure in the image based on a position of the fourth weighted centroid with respect to a position of the fifth weighted centroid; and
compare the first trace and the second trace to identify at least one ridgeline of the structure in the image, wherein the ridgeline is a border between regions of the structure or between parts of the structure that diverge.

**15.** An apparatus (100) as claimed in claim 14, wherein the processor (102) is configured to control one or more user interfaces (104) to render the mapped at least part of the first trace of the structure in the image.

**Patentansprüche**

**1.** Verfahren zum Abbilden mindestens eines Teils einer Struktur in einem Bild von mindestens einem Teil eines Körpers eines Subjekts, wobei das Verfahren umfasst:

Bestimmen (402) eines ersten gewichteten Schwerpunkts eines ersten Bereichs, der einen ersten Punkt im Bild des mindestens eines Teils des Körpers des Subjekts umgibt;
Bestimmen (404) eines zweiten gewichteten Schwerpunkts eines zweiten Bereichs, der den ersten gewichteten Schwerpunkt umgibt; und
Abbilden (406) mindestens eines Teils einer ersten Spur der Struktur in dem Bild basierend auf einer Position des zweiten gewichteten Schwerpunkts in Bezug auf eine Position des ersten gewichteten Schwerpunkts;
Bestimmen (408) eines vierten gewichteten Schwerpunkts eines vierten Bereichs, der einen zweiten Punkt in dem Bild umgibt, wobei der zweite Punkt an den ersten Punkt angrenzend ist;
Bestimmen (410) eines fünften gewichteten Schwerpunkts eines fünften Bereichs, der den vierten gewichteten Schwerpunkt umgibt;
Abbildung (412) mindestens eines Teils einer zweiten Spur der Struktur in dem Bild basierend auf einer Position des vierten gewichteten Schwerpunkts in Bezug auf eine Position des fünften gewichteten Schwerpunkts; und
Vergleichen (414) der ersten Spur und der zweiten Spur, um mindestens eine Kammlinie der Struktur in dem Bild zu identifizieren, wobei die Kammlinie eine Grenze zwischen Regionen der Struktur oder zwischen Teilen der Struktur ist, die divergieren.

**2.** Verfahren nach Anspruch 1, wobei die Struktur eine Gefäßstruktur ist.

**3.** Verfahren nach Anspruch 1 oder 2, wobei der gewichtete Schwerpunkt ein intensitätsgewichteter Schwerpunkt, ein vesselness-gewichteter Schwerpunkt, ein dichtegewichteter Schwerpunkt oder gewichtet nach einer Potenz einer Intensität ist.

**4.** Verfahren nach Anspruch 3, wobei der Schwerpunkt weiter gemäß einem Gaußschen Gewicht des euklidischen Abstands gewichtet wird.

**5.** Verfahren nach einem der vorhergehenden Ansprüche, wobei das Verfahren ferner umfasst:

Bestimmen eines dritten gewichteten Schwerpunkts eines dritten Bereichs, der den zweiten gewichteten Schwerpunkt umgibt; und
Abbilden mindestens eines Teils der ersten Spur der Struktur in dem Bild basierend auf einer Position des dritten gewichteten Schwerpunkts in Bezug auf die Position des zweiten gewichteten Schwerpunkts.

**6.** Verfahren nach Anspruch 1, wobei das Vergleichen umfasst:

Bestimmen, ob die erste Spur und die zweite Spur divergieren; und
Identifizieren der mindestens einen Kammlinie der Struktur in dem Bild als zwischen der ersten Spur und der zweiten Spur lokalisiert, wobei bestimmt wird, dass die erste Spur und die zweite Spur divergieren.

**7.** Verfahren nach Anspruch 6, wobei das Bestimmen, ob die erste Spur und die zweite Spur divergieren, umfasst:

Bestimmen, dass die erste Spur und die zweite Spur divergieren, wenn ein euklidischer Abstand zwischen einem Punkt in der ersten Spur und einem entsprechenden Punkt in der zweiten Spur ist kleiner als ein euklidischer Abstand zwischen einem nachfolgenden Punkt in der ersten Spur und einem nachfolgenden entsprechenden Punkt in der zweiten Spur.
Bestimmen, dass die erste Spur und die zweite Spur divergieren, wenn ein durchschnittlicher euklidischer Abstand zwischen entsprechenden Punkten in der ersten Spur und der zweiten Spur größer als ein Schwellenwert ist; oder
Bestimmen, dass die erste Spur und die zweite Spur divergieren, wenn ein maximaler euklidischer Abstand zwischen entsprechenden Punkten in der ersten Spur und der zweiten Spur größer als ein Schwellenwert ist.

**8.** Verfahren nach einem der Ansprüche 6 oder 7, wobei das Identifizieren der mindestens einen Kammlinie der Struktur in dem Bild umfasst das Identifizieren der mindestens einen Kammlinie als auf halbem Weg zwischen der ersten Spur und der zweiten Spur befindlich.

**9.** Verfahren nach einem der Ansprüche 6, 7 oder 8, ferner umfassend:
Identifizieren der mindestens einen Kammlinie als nicht vorhanden zwischen der ersten Spur und der zweiten Spur, wobei bestimmt wird, dass die erste Spur und die zweite Spur konvergieren.

**10.** Verfahren nach einem der vorhergehenden Ansprüche, wobei das Verfahren ausgehend von mindestens einem anderen Punkt im Bild wiederholt wird, um mindestens einen Teil von mindestens einer anderen Spur der Struktur des Körperteils im Bild abzubilden.

**11.** Verfahren nach einem der vorhergehenden Ansprüche, wobei das Bild ein zweidimensionales Bild ist und der Punkt im Bild ein Pixel ist, oder das Bild ein dreidimensionales Bild ist und der Punkt im Bild ein Voxel ist.

**12.** Verfahren nach einem der vorhergehenden Ansprüche, wobei das Bild ein zweidimensionales Bild ist und die mindestens eine Kammlinie mindestens eine Linie in dem zweidimensionalen Bild ist, oder das Bild ein dreidimensionales Bild ist und die mindestens eine Kammlinie ist mindestens eine Oberfläche in dem dreidimensionalen Bild.

**13.** Computerlesbares Medium mit darin enthaltenem computerlesbarem Code, der, wenn der Code von einem geeigneten Computer oder Prozessor ausgeführt wird, den Computer oder Prozessor veranlasst, das Verfahren nach einem der Ansprüche 1 bis 12 auszuführen.

**14.** Vorrichtung (100), die angepasst ist, um mindestens einen Teil einer Struktur in einem Bild von mindestens einem Teil eines Körpers eines Subjekts abzubilden, wobei die Vorrichtung umfasst:
ein Prozessor (102) konfiguriert zu:

Bestimmen eines ersten gewichteten Schwerpunkts eines ersten Bereichs, der einen ersten Punkt im Bild des mindestens einen Teils des Körpers des Subjekts umgibt;
Bestimmen eines zweiten gewichteten Schwerpunkts eines zweiten Bereichs, der den ersten gewichteten Schwerpunkt umgibt; und
Abbildung mindestens eines Teils einer ersten Spur der Struktur in dem Bild basierend auf einer Position des zweiten gewichteten Schwerpunkts in Bezug auf eine Position des ersten gewichteten Schwerpunkts;
Bestimmen eines vierten gewichteten Schwerpunkts eines vierten Bereichs, der einen zweiten Punkt im Bild umgibt, wobei der zweite Punkt an den ersten Punkt angrenzend ist;
Bestimmen eines fünften gewichteten Schwerpunkts eines fünften Bereichs, der den vierten gewichteten Schwerpunkt umgibt;
Abbildung mindestens eines Teils einer zweiten Spur der Struktur im Bild basierend auf einer Position des vierten gewichteten Schwerpunkts in Bezug auf eine Position des fünften gewichteten Schwerpunkts; und
Vergleichen der ersten Spur und der zweiten Spur, um mindestens eine Kammlinie der Struktur in dem Bild zu identifizieren, wobei die Kammlinie eine Grenze zwischen Regionen der Struktur oder zwischen Teilen der Struktur ist, die divergieren.

**15.** Vorrichtung (100) nach Anspruch 14, wobei der Prozessor (102) konfiguriert ist, um eine oder mehrere Benutzerschnittstellen (104) zu steuern, um die abgebildete mindestens einen Teil der ersten Spur der Struktur in dem Bild zu rendern.

**Revendications**

**1.** Procédé de mappage d'au moins une partie d'une structure dans une image d'au moins une partie d'un corps d'un sujet, le procédé comprenant:

la détermination (402) d'un premier centroïde pondéré d'une première zone entourant un premier point dans l'image de l'au moins une partie du corps du sujet;
la détermination (404) d'un deuxième centroïde pondéré d'une seconde zone entourant le premier centroïde pondéré; et
le mappage (406) d'au moins une partie d'une première trace de la structure dans l'image sur la base d'une position du deuxième centroïde pondéré par rapport à une position du premier centroïde pondéré;

la détermination (408) d'un quatrième centroïde pondéré d'une quatrième zone entourant un deuxième point dans l'image, où le deuxième point est adjacent au premier point;

la détermination (410) d'un cinquième centroïde pondéré d'une cinquième zone entourant le quatrième centroïde pondéré;

le mappage (412) d'au moins une partie d'une deuxième trace de la structure dans l'image sur la base d'une position du quatrième centroïde pondéré par rapport à une position du cinquième centroïde pondéré; et

la comparaison (414) de la première trace et la seconde trace pour identifier au moins une ligne de crête de la structure dans l'image, où la ligne de crête est une borne entre des régions de la structure ou entre des parties de la structure qui divergent.

2. Procédé selon la revendication 1, dans lequel la structure est une structure vasculaire.

3. Procédé selon la revendication 1 ou 2, dans lequel le centroïde pondéré est un centroïde pondéré en fonction de l'intensité, un centroïde pondéré en fonction des propriétés des vaisseaux, un centroïde pondéré en fonction de la densité ou pondéré en fonction d'une puissance d'une intensité.

4. Procédé selon la revendication 3, dans lequel le centroïde est en outre pondéré en fonction d'un poids gaussien de distance euclidienne.

5. Procédé selon l'une quelconque des revendications précédentes, le procédé comprenant en outre:

la détermination d'un troisième centroïde pondéré d'une troisième zone entourant le deuxième centroïde pondéré; et

le mappage d'au moins une partie de la première trace de la structure dans l'image sur la base d'une position du troisième centroïde pondéré par rapport à la position du deuxième centroïde pondéré.

6. Procédé selon la revendication 1, dans lequel la comparaison comprend:

la détermination de la divergence entre la première trace et la deuxième trace; et

la identification de l'au moins une ligne de crête de la structure dans l'image comme étant située entre la première trace et la deuxième trace où il est déterminé que la première trace et la deuxième trace divergent.

7. Procédé selon la revendication 6, dans lequel déterminer si la première trace et la deuxième trace divergent comprend:

déterminer que la première trace et la deuxième trace divergent où une distance euclidienne entre un point dans la première trace et un point correspondant dans la deuxième trace est inférieure à une distance euclidienne entre un point suivant dans la première trace et un point correspondant suivant dans la deuxième trace;

déterminer que la première trace et la deuxième trace divergent où une distance euclidienne moyenne entre des points correspondants dans la première trace et la deuxième trace est supérieure à un seuil; ou

déterminer que la première trace et la deuxième trace divergent où une distance euclidienne maximale entre des points correspondants dans la première trace et la deuxième trace est supérieure à un seuil.

8. Procédé selon l'une quelconque des revendications 6 ou 7, dans lequel l'identification de l'au moins une ligne de crête de la structure dans l'image comprend l'identification de l'au moins une ligne de crête comme étant située à mi-chemin entre la première trace et la deuxième trace.

9. Procédé selon l'une quelconque des revendications 6, 7 ou 8, comprenant en outre:

l'identification de l'au moins une ligne de crête comme étant absente entre la première trace et la deuxième trace où il est déterminé que la première trace et la deuxième trace convergent.

10. Procédé selon l'une quelconque des revendications précédentes, dans lequel le procédé est répété à partir d'au moins un autre point de l'image pour mapper au moins une partie d'au moins une autre trace de la structure de la partie du corps dans l'image.

11. Procédé selon l'une quelconque des revendications précédentes, dans lequel l'image est une image bidimensionnelle et le point dans l'image est un pixel ou l'image est une image tridimensionnelle et le point dans l'image est un voxel.

**12.** Procédé selon l'une quelconque des revendications précédentes, dans lequel l'image est une image bidimensionnelle et l'au moins une ligne de crête est au moins une ligne dans l'image bidimensionnelle, ou l'image est une image tridimensionnelle et l'au moins une ligne de crête est au moins une surface dans l'image tridimensionnelle.

**13.** Support lisible par ordinateur comportant un code lisible par ordinateur y incorporé qui, lorsque le code est exécuté par un ordinateur ou un processeur approprié, amène l'ordinateur ou le processeur à mettre en œuvre le procédé selon l'une quelconque des revendications 1 à 12.

**14.** Appareil (100) adapté pour mapper au moins une partie d'une structure dans une image d'au moins une partie d'un corps d'un sujet, l'appareil comprenant:
un processeur (102) configuré pour:

déterminer un premier centroïde pondéré d'une première zone entourant un premier point dans l'image de l'au moins une partie du corps du sujet;
déterminer un deuxième centroïde pondéré d'une seconde zone entourant le premier centroïde pondéré; et
mapper au moins une partie d'une première trace de la structure dans l'image sur la base d'une position du deuxième centroïde pondéré par rapport à une position du premier centroïde pondéré;
déterminer un quatrième centroïde pondéré d'une quatrième zone entourant un deuxième point dans l'image, où le deuxième point est adjacent au premier point;
déterminer un cinquième centroïde pondéré d'une cinquième zone entourant le quatrième centroïde pondéré;
mapper au moins une partie d'une deuxième trace de la structure dans l'image sur la base d'une position du quatrième centroïde pondéré par rapport à une position du cinquième centroïde pondéré; et
comparer la première trace et la deuxième trace pour identifier au moins une ligne de crête de la structure dans l'image, où la ligne de crête est une borne entre des régions de la structure ou entre des parties de la structure qui divergent.

**15.** Appareil (100) selon la revendication 14, dans lequel le processeur (102) est configuré pour contrôler une ou plusieurs interfaces-utilisateurs (104) pour restituer l'au moins une partie mappée de la première trace de la structure dans l'image.

Figure 1

200

Determine first weighted centroid of first
area surrounding first point in image of
at least part of body of subject

202

Determine second weighted centroid
of second area surrounding
first weighted centroid

204

Map at least part of a first trace of the structure in
the image based on position of second weighted
centroid with respect to position of first weighted
centroid

206

## Figure 2

300

Determine first weighted centroid of first
area surrounding first point in image of
at least part of body of subject

302

Determine second weighted centroid of
second area surrounding first weighted centroid

304

Map at least part of a first trace of the structure
in the image based on position of second
weighted centroid with respect to position
of first weighted centroid

306

Determine third weighted centroid of third area
surrounding the second weighted centroid

308

Map at least part of first trace of the structure
based on positon of third weighted centroid with
respect to positon of second weighted centroid

310

Repeat

312

Figure 3

400

┌─────────────────────────────────────────────┐
│  Determine first weighted centroid of first   │  402
│  area surrounding first point in image of     │
│  at least part of body of subject             │
└─────────────────────────────────────────────┘

┌─────────────────────────────────────────────┐
│  Determine second weighted centroid of        │  404
│  second area surrounding first weighted centroid │
└─────────────────────────────────────────────┘

┌─────────────────────────────────────────────────────┐
│  Map at least part of a first trace of the structure in the image based │  406
│  on position of second weighted centroid with respect │
│  to position of first weighted centroid               │
└─────────────────────────────────────────────────────┘

┌─────────────────────────────────────────────┐
│  Determine fourth weighted centroid of fourth area │  408
│  surrounding second point in image            │
└─────────────────────────────────────────────┘

┌─────────────────────────────────────────────┐
│  Determine fifth weighted centroid of fifth area │  410
│  surrounding fourth weighted centroid         │
└─────────────────────────────────────────────┘

┌─────────────────────────────────────────────┐
│  Map at least part of a second trace of the structure │  412
│  based on positon of fourth weighted centroid with │
│  respect to positon of fifth weighted centroid │
└─────────────────────────────────────────────┘

┌─────────────────────────────────────────────┐
│  Compare the first and second traces          │  414
│  to identify ridgelines in the image          │
└─────────────────────────────────────────────┘

┌─ ─ ─ ─ ─ ─ ─ ─ ─ ─ ─ ─ ─ ─ ─ ─ ┐
     Repeat                              416
└─ ─ ─ ─ ─ ─ ─ ─ ─ ─ ─ ─ ─ ─ ─ ─ ┘

Figure 4

500

Resample image volume isotropically 502

Enhance the structure in the image 504

Determine weighted centroid in component-wise manner 506

Store next trace point for each voxel location 508

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140079306 A1

**Non-patent literature cited in the description**

- **G. YANG et al.** A Multiscale Tracking Algorithm for the Coronary Extraction in MSCT Angiography. *Proc. IEEE EMBS,* 2006

- **D. COMANICIU ; P. MEER.** Mean Shift: A Robust Approach Toward Feature Space Analysis. *IEEE T. PAMI,* 2002, vol. 24 (5